# EUROPÄISCHE PATENTSCHRIFT

(11) **EP 1 300 474 B1**
(45) Veröffentlichungstag und Bekanntmachung des Hinweises auf die Patenterteilung: **07.09.2005**
(21) Anmeldenummer: 02450220.5
(22) Anmeldetag: 02.10.2002
(51) Int. Cl.: C14C 11/00, C14B 1/40, C09D 175/04, C08K 7/22, C08J 9/32

(54) **Vollnarbiges Rindnappaleder und Verfahren zur Herstellung desselben**
Full-grain cattle nappa and process for preparing the same
Nappa bovin pleine fleur et son procédé de préparation

(30) Priorität: 04.10.2001 AT 7622001 U
(43) Veröffentlichungstag der Anmeldung: 09.04.2003
(73) Patentinhaber: Schaefer, Philipp, 30519 Hannover (DE)
(72) Erfinder: Schaefer, Philipp, 30519 Hannover (DE)
(74) Vertreter: Wildhack, Helmut

(56) Entgegenhaltungen:
- EP-A- 0 331 214
- DE-A- 2 445 605
- PATENT ABSTRACTS OF JAPAN vol. 013, no. 326 (C-620), 24. Juli 1989 (1989-07-24) & JP 01 104634 A (DAI ICHI KOGYO SEIYAKU CO LTD), 21. April 1989 (1989-04-21)

## Beschreibung

Die Erfindung betrifft ein vollnarbiges Rindnappaleder, das an einer Seite mit einer Zurichtung versehen ist, welche teilweise eine aus einer verfestigten, Mikrohohlkugeln enthaltenden Polyurethandispersion gebildete Schaumstruktur aufweist. Ferner betrifft die Erfindung ein Verfahren zur Herstellung eines solchen Leders.

Derartige Leder sind bereits bekannt. So offenbart die DE 24 45 605 C3 ein Leder für die Herstellung von Schuhen, Polsterbezügen od.dgl., das mit einer porösen Elastomerbeschichtung versehen ist, die Mikrohohlkugeln enthält, deren Hülle aus Polyvinylidenchlorid-Copolymerisat oder Polyvinylchlorid-Copolymerisat besteht und die im Inneren ein Gas enthalten. Die dem Leder abgewendete Oberfläche der Beschichtung kann zusätzlich mit einem Finish versehen sein.

Aus der US 4,751,116 A ist es bereits bekannt, auf die faserige Oberfläche von Spaltleder eine aus zwei Lagen bestehende Beschichtung aufzubringen, wobei die der Spaltlederoberfläche zugewendete Lage aus einer Mikrohohlkugeln enthaltenden, verfestigten Polyurethandispersion gebildet ist. Zusätzlich kann die dem Spaltleder abgewendete Oberfläche der Beschichtung mit einem Finish versehen sein.

Aus der US 4,923,723 A ist gleichfalls ein Spaltleder bekannt geworden, das an seiner faserigen Oberfläche mit einer aus zwei Lagen bestehenden Beschichtung versehen ist, wobei die dem Spaltleder zugewendete Lage Mikrohohlkugeln aufweist.

In der Autoindustrie und für die Herstellung hochwertiger Polstermöbel, aber auch für Schuhobermaterial werden vollnarbige Rindleder verwendet, welche die erforderlichen Eigenschaften aufweisen und, damit sie als echtes vollnarbiges Leder bezeichnet werden können, nur eine sehr dünne Zurichtung aufweisen dürfen. Diese Leder müssen weiters die erforderliche Geschmeidigkeit aufweisen und einen Weichheitsgrad von mindestens 4, vorzugsweise mehr als 4,5, besitzen, damit sie sich einerseits in die erforderliche Form bringen lassen können, anderseits ein angenehmes Tast- und Sitzgefühl gewährleistet ist. Der Weichheitsgrad wird mit einem Weichheitstester BLC ST300 nach IUP36 bei einem Ringdurchmesser von 25 mm gemessen. Eine derartige Weichheit wird durch sehr langes Walken der Lederhäute erzielt. Dabei entsteht jedoch an großen Teilen der Lederhaut, so beispielsweise im Bauchbereich der Haut, eine Losnarbigkeit, die zwischen 25 % und 40 % der gesamten Fläche der Haut beträgt. Diese Fläche ist für eine Weiterverarbeitung des Leders für hochwertige Autoinnenausstattungen, wie z.B. Autositze, Polstermöbel und hochwertige Schuhe, nicht geeignet, der bisher bei einem langen Walken entstehende Abfall an teurer Lederhaut ist somit groß. Ein weiterer wesentlicher Nachteil der Anwendung der bisher bekannten, mit einer Zurichtung versehenen Leder besteht darin, dass diese nicht oder nicht ausreichend atmungsaktiv sind.

Man hat daher bereits vorgeschlagen, auf die Narbenseite des Leders ein durch Einrühren von Luft geschäumtes Kunststoffmaterial aufzubringen und dieses nach Verfestigung mit einer Lackschicht abzudecken, welche zwecks Herstellung einer narbenartigen Oberfläche einer Prägung unterzogen wird. Dabei wird jedoch im Bereich der Narbtäler das Schaummaterial zusammengepresst, sodass dort die durch den Schaum bewirkte Weichheit und Elastizität verloren geht. Die Schaumschicht weist somit eine unterschiedliche Dichte auf, nämlich auf den gerade in Gebrauch stärker abriebbelasteten Narbkuppen eine geringere Dichte, was sich für die spätere Verwendung nachteilig auswirkt. Außerdem besteht bei dieser bekannten Anordnung die Gefahr, dass beim Spannen des Leders über Kanten, Rundungen od.dgl. infolge der Nachgiebigkeit der Schaumschicht, vor allem unter Einwirkung von Wärme die Narbstruktur verloren geht.

Die vorliegende Erfindung hat sich zur Aufgabe gestellt, ein vollnarbiges Rindnappaleder derart zu verbessern, dass es die in der Automobilindustrie und in der Polsterindustrie geforderten Eigenschaften aufweist und welches vor allem auch nach dem erforderlichen Walken keine nennenswerte Losnarbigkeit aufweist und seine Narbstandfestigkeit auch beim Dehnen nicht verliert sowie die erforderliche, Wasserdampfdurchlässigkeit besitzt. Insbesondere soll das erfindungsgemäße Leder atmungsaktiv, abriebfest, und auch hinsichtlich des Farbabriebes, lichtecht, hydrolsenbeständig und kratzfest sein. Außerdem muss das Leder foggingarm sein und eine geringe Ausdünstung aufweisen, damit bei Verwendung für Autoinnenausstattungen ein Beschlagen der Innenseite der Windschutzscheibe vermieden wird, wobei vor allem auch keine toxischen Gase freigesetzt werden dürfen. Die Oberfläche des Leders muss ferner gegen bestimmte Chemikalien, aber auch gegen Wasser, beständig sein, und es soll sich die mit der Narbung versehene Lederoberfläche auch bei einem Aufkaschieren auf Untermaterialien, insbesondere beim Spannen des Leders um Kurven bzw. Kanten nicht nachteilig verändern.

Unter dem Begriff "vollnarbiges Rindnappaleder" wird ein Leder verstanden, welches durch langes Walken seine Weichheit bei gleichzeitiger Ausbildung der Walknappa-Oberflächenstruktur mit dem charakteristischen "Walkkorn" erhält. Ein derartiges Leder lässt sich nach den bekannten Verfahren nicht oder nur sehr unzureichend herstellen.

Zur Lösung der gestellten Aufgaben schlägt die Erfindung vor, dass die Zurichtung aus einer auf der Narbenseite des vollnarbigen Rindleders aufgebrachten, eine Dicke zwischen 0,015 mm und 0,04 mm aufweisenden, vorzugsweise pigmentierten ersten Schicht aus einer verfestigten, Polyurethan und/oder Polyacrylat enthaltenden Dispersion, die überwiegend geschlossene Zellen bildende Mikrohohlkugeln mit einem Durchmesser kleiner als 45µm, vorzugsweise zwischen 15µm und 35µm, und einen Anteil von zumindest 10 Vol.-% an offenen Zellen und an ihrer Oberseite eine Prägung aufweist, und aus einer auf dieser ersten Schicht aufgebrachten, aus einem gegebenenfalls von mehreren Lagen gebildeten zweiten Schicht besteht, die aus einem vernetzten, ein Mattierungsmittel enthaltenden, Lackauftrag gebildet ist, und dass das Leder einer Walkbehandlung unterzogen ist. Die zweite Schicht besteht zweckmäßig aus einem verfestigten wässerigen Polyurethan-Lackauftrag.

Gemäß einem weiteren Merkmal der Erfindung weisen die Mikrohohlkugeln eine dünne Hülle auf, die vorzugsweise zu mehr als 75 % aus Polyvinylidenchlorid und die weniger als 25 % aus Polyacrylnitril besteht, und die Mikrohohlkugeln enthalten im Inneren ein schweres Gas, vorzugsweise Isobutan.

Die Zwischenräume zwischen den Mikrohohlkugeln bilden die für die Wasserdampfdurchlässigkeit und Atmungsaktivität erforderlichen offenen Zellen. Diese offenen Zellen können noch dadurch vermehrt werden, dass erfindungsgemäß die dünne Hülle einzelner Mikrohohlkugeln durch mechanische und/oder chemische Einwirkung geöffnet wird, sodass dadurch auch einzelne der Mikrohohlkugeln offene Zellen bilden. Zu diesem Zweck kann erfindungsgemäß die zweite Schicht ein die dünne Hülle einzelner Mikrohohlkugeln teilweise anlösendes Lösungsmittel, wie Ethylacetat oder Methylethylketon, enthalten. Es kann aber auch ein mechanisches Öffnen einzelner Mikrohohlkugeln, beispielsweise durch Einstechen in die Hüllen derselben mittels Nadeln vorgenommen werden.

Das erfindungsgemäße Leder ist somit mit einer Zurichtung versehen, dessen erste Schicht, nämlich die schaumartige pigmentierte Schicht, im wesentlichen dicht an dicht aneinander anliegende Mikrohohlkugeln kleinen Durchmessers aufweist, welche sich gegenseitig abstützen, sodass ein Platzen der dünnen Hüllen bei Belastung und ein dadurch bewirktes Austreten des Gases verhindert wird. Diese Schicht weist somit an allen Stellen eine gleichbleibende, sich nicht verändernde Dichte auf. Es hat sich gezeigt, das selbst bei acht Stunden walken, die von den Mikrohohlkugeln gebildeten, geschlossenen Zellen nicht zerstört werden und auch kaum Gas entweicht. Da zwischen den einzelnen Kugeln nur eine im wesentlichen punktförmige Berührung stattfindet, entstehen trotzdem Hohlräume, durch welche in dieser ersten Schicht offene Zellen gebildet werden, welche die erforderliche Wasserdampfdurchlässigkeit und Atmungsaktivität gewährleisten und deren Anzahl in erwähnter Weise durch Öffnen der Hüllen einzelner Mikrohohlkugeln noch, falls erforderlich, vergrößert werden kann.

Die zweite, ein Mattierungsmittel enthaltende Lackschicht weist vorzugsweise eine Dicke zwischen 0,02 mm und 0,05 mm auf, ist somit so dünn, dass die Wasserdampfdurchlässigkeit durch diese zweite Schicht nicht in unerwünschter Weise beeinträchtigt wird. Diese zweite Schicht füllt die Mikroporen an der Oberfläche der ersten Schicht aus, ohne jedoch in diese Schicht einzudringen, sodass einerseits eine untrennbare Verankerung zwischen den beiden Schichten gewährleistet ist, anderseits eine Beeinträchtigung der elastischen Eigenschaften der ersten Schicht vermieden wird.

Das erfindungsgemäße Leder weist eine Wasserdampfdurchlässigkeit von mehr als 0,6 mg/cm².h, vorzugsweise von mehr als 1,0 mg/cm².h und einen durch Walken erzielten Weichheitsgrad von mindestens 4,5 auf, ohne dass große Flächen losnarbig werden. Der Weichheitsgrad wird in der am Anfang der Beschreibung angeführten Weise gemessen. Die Dicke des erfindungsgemäßen Rindnappaleders beträgt zwischen 1,0 mm und 1,4 mm.

Es hat sich als zweckmäßig erwiesen, wenn wenigstens eine der Schichten ein feinpulveriges Holzmehl in einer Menge zwischen 0,5 und 9 Vol.-%, vorzugsweise in einer Menge zwischen 1,5 und 7 Vol.-%, enthält. Dadurch kann die Wasserdampfdurchlässigkeit der Zurichtung verbessert bzw. durch Variation der Menge verändert und den jeweiligen Erfordernissen angepasst werden.

Besonders vorteilhaft ist es, wenn das Leder vor dem Aufbringen der Schichten die Form eines Formatzuschnittes aufweist, wenn also aus einer großen Lederhaut vor dem Aufbringen der Zurichtung kleinere, der Verwendung des Leders entsprechende Teile herausgeschnitten werden. Dadurch kann besser auf die unterschiedlichen Beschaffenheiten einer ganzen tierischen, etwa 50 m² großen Haut Rücksicht genommen werden, die in den einzelnen Bereichen eine unterschiedliche Dichte aufweist. So ist im Außenbereich einer ganzen tierischen Haut die Dichte niedriger, so dass auch beispielsweise der zum Prägen benötigte Druck niedriger gehalten werden kann, wogegen im Innenbereich der Haut die Dichte höher ist.

Außerdem können für das Prägen von Formatzuschnitten kleinere Prägewalzen Verwendung finden, wodurch sich die Kosten für die Anschaffung solcher Prägewalzen wesentlich reduzieren, dies deshalb, da bei Prägewalzen mit einer Länge von beispielsweise 3 Metern, wie sie für das Prägen einer ganzen tierischen Haut benötigt werden, Dimensionierung und Lagerung wesentlich stärker bemessen werden müssen wie bei kleinen Prägewalzen mit einer Länge von beispielsweise 80 cm, wie sie für Formatzuschnitte benötigt werden.

Das erfindungsgemäße Verfahren zur Herstellung des vollnarbigen Rindsnappaleders ist im wesentlichen dadurch gekennzeichnet, dass auf die Narbenseite des Rindleders eine vorzugsweise ein Pigment enthaltende Dispersion auf Basis von Polyurethan und/oder Polyacrylat aufgetragen wird, welche Mikrohohlkugeln mit einem Durchmesser zwischen 15 µm und 45 µm und/oder Kompaktteilchen enthält, aus welchen durch Wärmezufuhr derartige Mikrohohlkugeln in situ gebildet werden, wobei die Mikrohohlkugeln eine dünne Hülle aus Polyvinylidenchlorid und Polyacrylnitril aufweisen, welche ein schweres Gas, vorzugsweise Isobutan, enthält, und wobei die Menge der Dispersion so gewählt wird, dass nach ihrem Verfestigen durch Wasserentzug eine erste Schicht mit einer Dicke zwischen 0,015 mm und 0,04 mm gebildet wird, welche, aus den Mikrohohlkugeln bestehende, überwiegend geschlossene Zellen, jedoch mindestens 10 Vol.-% offene Zellen aufweist, dass die verfestigte erste Schicht durch Anwendung von Druck und/oder Wärme geprägt wird, dass hierauf eine vernetzbare, vorzugsweise Mattierungsmittel enthaltende Polyurethandispersion, gegebenenfalls in mehreren aufeinanderfolgenden Lagen, aufgetragen wird, welche eine zweite Lackschicht bildet, und dass das Leder einer Walkbehandlung unterzogen wird. Durch das Prägen der ersten Schicht unter Anwendung von Druck und Wärme werden in Folge des niedrigen Erweichungspunktes der Mikrohohlkugeln, deren Hülle vorzugsweise zu mehr als 75 % aus Polyvinylidenchlorid besteht, bei einer Prägetemperatur von unter 120°C einige Hüllen der Mikrohohlkugeln zerstört und bilden zusätzlich offene, die Atmungsaktivität vergrößernde Zellen. Gleichzeitig wird eine untrennbare Verankerung mit dem vollnarbigen Rindsleder sichergestellt.

Um die Hüllen einzelner Mikrohohlkugeln zu zerstören und dadurch die Anzahl der offenen Zellen zu vergrößern, können erfindungsgemäß auch die dünnen Hüllen einzelner Mikrohohlkugeln durch ein, vorzugsweise in der zweiten Schicht enthaltenes, Lösungsmittel, wie Ethylacetat oder Methylethylketon, angelöst werden. Auch ein mechanisches Zerstören der Hüllen einzelner Mikrohohlkugeln ist möglich, nämlich dadurch, dass in der ersten Schicht, gegebenenfalls während des Prägens, durch Einstechen mittels Nadeln od.dgl., Löcher hergestellt werden, wodurch die dünne Hülle einzelner Mikrohohlkugeln geöffnet wird. Das Einstechen kann hiebei mittels eines Nadelbrettes oder einer Walze erfolgen und die Nadeln können kalt oder warm sein. Nach dem Entfernen der Nadeln schließen sich zwar infolge des elastischen Materiales, aus welchem die erste Schicht besteht, die Löcher, die geöffneten Mikrohohlkugeln und die dadurch entstehenden offenen Zellen bleiben jedoch bestehen.

Ferner kann, wenn als Mattierungsmittel Siliziumdioxid, vorzugsweise in einer Teilchengröße zwischen 2 µm und 4 µm verwendet wird, ein Öffnen der Hülle einzelner Mikrohohlkugeln durch Einwirken dieses Mattierungsmittels erfolgen.

Zweckmäßig erfolgt die Prägung durch Anwendung einer Prägewalze mit einer Temperatur zwischen 80°C und 120°C, wobei der Wärmekontakt zwischen der Prägewalze und der ersten Schicht, vorzugsweise weniger als 2 sec. beträgt. Die Prägewalze weist an ihrer Oberfläche der herzustellenden Nappanarbenstruktur entsprechende Vertiefungen auf, in die beim Prägen Teile der ersten Schicht eindringen bzw. in diese hineinschäumen, sodass die gewünschte Nappanarbung entsteht.

Der nach dem Prägen aufgebrachte Lackauftrag kann in mehreren Schritten, beispielsweise durch aufeinanderfolgendes Aufsprühen auf die verfestigte erste Schicht, vorgenommen werden und bewirkt bei entsprechender Mattierung und Pigmentierung den gewünschten Farbton des Leders.

Um neben der Nappaprägung den typischen weichen Walknappaeffekt zu erzielen und um den erforderlichen Weichheitsgrad von mehr als 4,5 zu erlangen, wird erfindungsgemäß vorgesehen, das Leder einer Walkbehandlung über eine Dauer von zumindest zwei Stunden, vorzugsweise zwischen 8 und 12 Stunden, zu unterziehen. Diese Walkbehandlung kann bereits nach dem Verfestigen der ersten Schicht, aber auch erst nach dem Verfestigen der zweiten Schicht erfolgen. Es ist auch möglich, einen Teil der Walkbehandlung nach dem Verfestigen der ersten Schicht und den Rest nach dem Verfestigen der zweiten Lackschicht vorzunehmen.

Wenn die Lackschicht aus mehreren Lagen besteht, so ist es auch möglich, das Prägen nach dem Aufbringen der ersten Lagen, jedenfalls aber vor dem Aufbringen der letzten Lage vorzunehmen.

Durch die von den Mikrohohlkugeln gebildeten geschlossenen Zellen wird erreicht, dass die erfindungsgemäßen weichen Walknappaleder nicht oder kaum losnarbig sind und über eine hohe Narbstandfestigkeit verfügen, sodass die nutzbare Fläche einer erfindungsgemäßen Lederhaut im Vergleich zu den bisher bekannten Rindnappaledern um etwa 50 % höher ist. Durch die offenen Zellen wird die erforderliche Wasserdampfdurchlässigkeit sichergestellt. Zusätzlich können offene Zellen durch Einbringen von Luft in die erste Schicht erzielt werden. Es hat sich gezeigt, dass bereits bei einem Anteil von 10 Vol.-% an offenen Zellen die Wasserdampfdurchlässigkeit mehr als 0,6mg/cm²•h beträgt.

Eine Verbesserung bzw. Steuerung der Wasserdampfdurchlässigkeit kann weiters dadurch erfolgen, dass wenigstens einer eine der beiden Schichten bildenden Dispersion vor dem Auftragen feinpulveriges Holzmehl in einer Menge zwischen 0,5 und 9 Vol.-%, vorzugsweise in einer Menge zwischen 1,5 und 7 Vol.-%, beigemengt wird. Durch Variieren der Menge kann die Wasserdampfdurchlässigkeit den jeweiligen Erfordernissen angepasst werden. So kann durch Beimengung von Holzmehl in einer entsprechenden Menge das nachteilige Perforieren des zugerichteten Leders im Sitzbereich eines Autositzes vermieden werden.

Insbesondere dann, wenn das Leder großen Beanspruchungen ausgesetzt ist, wie beispielsweise bei Sitzen in öffentlichen Verkehrsmitteln, ist es von Vorteil, wenn die Narbenseite des Rindleders vor dem Auftragen der die erste Schicht bildenden Dispersion einer Vorbehandlung unterzogen wird, durch die eine bessere Verbindung der Zurichtung mit der Narbenseite des Leders erzielt wird. Eine solche Vorbehandlung kann beispielsweise dadurch vorgenommen werden, dass die Narbenseite des Rindleders, vorzugsweise durch Schleifen, aufgeraut wird. Durch leichtes Anschleifen mit einem extrem feinkörnigen Schleifpapier wird die Haftkraft wesentlich erhöht, wobei jedoch die Narbenstruktur des Leders zu mindestens 90% erhalten bleibt.

Es kann aber auch zu diesem Zweck die Narbenseite des Rindleders vor dem Aufbringen der Zurichtung beflammt werden. Es wurde gefunden, dass durch dieses Beflammen quasi in der Oberfläche Radikale entstehen, wodurch gleichfalls die Haftung der Zurichtung wesentlich verbessert wird. Am besten eignet sich hiefür eine Flamme ähnlich einer Lötflamme, durch die die Narbenschicht lediglich oberflächlich auf mehr als 160°C erwärmt wird, wobei in der Mitte und an der Unterseite des Leders die Temperatur nicht 110°C übersteigt. Durch diese Behandlung des Leders verändert die Narbenseite ihr Aussehen nicht.

Zweckmäßig werden vor dem Auftragen der die Zurichtung bildenden Dispersion aus einer Rindlederhaut Formatteile herausgetrennt. Dadurch kann nicht nur, wie bereits erwähnt, den unterschiedlichen Beschaffenheiten der Haut in den einzelnen Bereichen derselben Rechnung getragen und dadurch die Verwertung der gesamten Haut sichergestellt werden, sondern es ist auch möglich, die Zusammensetzung und Beschaffenheit der Zurichtung entsprechend den Erfordernissen auf einfache Weise zu verändern. So können beispielsweise auch die einzelnen Formatteile so gestaltet werden, dass ein Teil der Zurichtung weicher und ein anderer Teil härter ist oder dass Teile der Zurichtung unterschiedliche Farben aufweisen. Dies kann auf einfache Weise dadurch erzielt werden, dass das Auftragen der die Zurichtung bildenden Dispersion durch einen Datenträger, also beispielsweise durch eine CD-Rom, eine Diskette oder ein Speicherchip, gesteuert wird. Ein weiterer Vorteil der Verwendung solcher Formatteile ist darin gelegen, dass für das Auftragen der die einzelnen Schichten bildenden Dispersion billigere Sprühanlagen und feinere Sprühdüsen verwendet werden können, so dass weniger Overspray erforderlich ist und eine geringere Menge an Abfall anfällt.

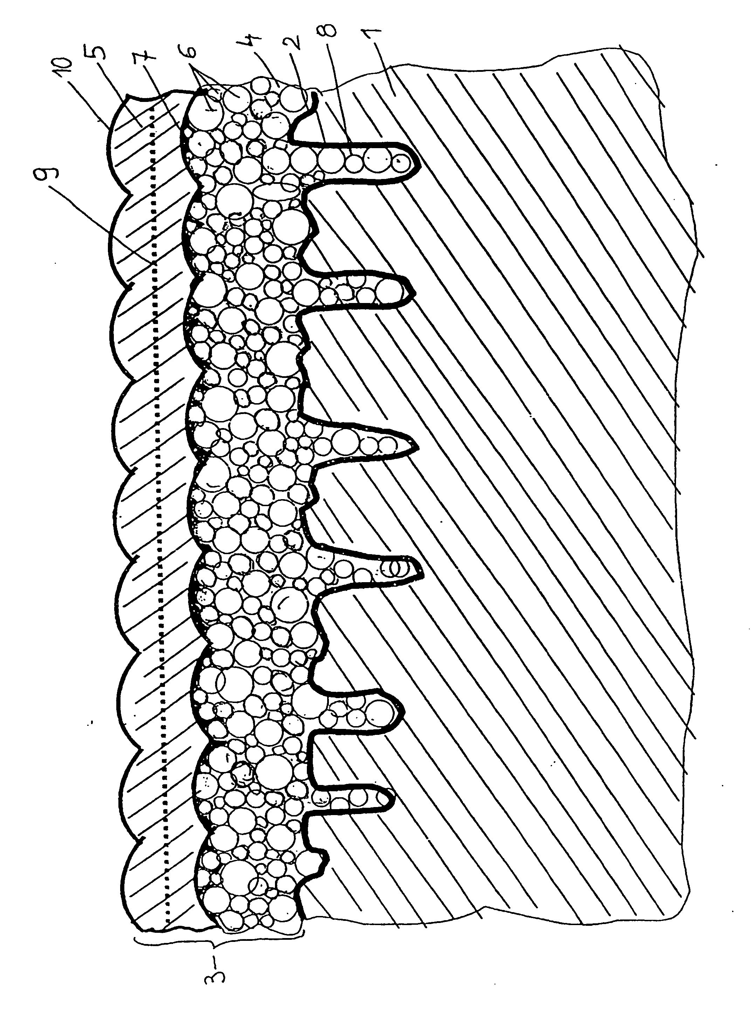

In der Zeichnung ist ein Schnitt durch das erfindungsgemäße Leder in etwa 500-facher Vergrößerung dargestellt.

Ein vollnarbiges Rindleder 1, welches an der Narbenseite nicht abgeschliffen oder nur geringfügig, beispielsweise mit extrem feinem Schleif- bzw. Polierpapier mechanisch bearbeitet ist, oder durch Beflammen beispielsweise mittels einer Lötlampe vorbehandelt ist, um die Haftung der Zurichtung zu verbessern, ist auf seiner Narbenseite 2 mit einer Zurichtung 3 versehen, die aus zwei Schichten 4, 5 besteht. Die mit der Narbenseite 2 verbundene Schicht 4 besteht aus einer verfestigten, Polyurethan und/oder Polyacrylat enthaltenden pigmentierten Dispersion, die Mikrohohlkugeln 6 enthält, deren dünne Hülle aus Polyvinylidenchlorid und Polyacrylnitril gebildet ist und die im Inneren ein schweres Gas, vorzugsweise Isobutan enthalten. Die Mikrohohlkugeln 6 weisen einen Durchmesser zwischen 15 µm und 45 µm auf, sind somit sehr klein, und liegen überwiegend dicht an dicht aneinander, sodass die erste Schicht 4 eine im wesentlichen geschlossen-zellige Schaumstruktur besitzt. Durch diese Anordnung der Mikrohohlkugeln stützen sich diese gegenseitig ab, sodass bei Belastung ein Platzen der dünnen Hülle und damit ein Austreten des Gases aus den Mikrohohlkugeln vermieden wird, und zwar auch dann, wenn das erfindungsgemäße Leder auf einer Unterlage aufkaschiert bzw. über Ecken, Kanten od.dgl., gebogen wird. Die erste Schicht 4 weist somit eine Schaumstruktur mit überall gleicher Dichte auf, die auch bei Belastungen nicht beeinträchtigt wird.

Infolge der Kugelform und der dadurch bewirkten, im wesentlichen punktförmigen Berührung benachbarter Mikrohohlkugeln entstehen jedoch zwischen den Mikrohohlkugeln kleine Hohlräume, welche offene Zellen bilden, durch die die erforderliche Wasserdampfdurchlässigkeit von mehr als 0,6 mg/cm²•h gewährleistet ist.

Die erste Schicht 4 weist somit eine mikroporöse Schaumstruktur auf, die durch weniger als 1 g Isobutangas/m² erzeugt und aufrecht erhalten wird und druckelastisch ist. Bei einem Dauerbiegeverhalten-Test zeigte sich nach 100 000 Knickungen, dass selbst in der Biegezone die von den Mikrohohlkugeln gebildeten geschlossenen Zellen aufrecht erhalten bleiben und nicht ihre Druckelastizität verlieren.

Die Schicht 4 wird dadurch gebildet, dass die Polyurethan und/oder Polyacrylat enthaltende Dispersion auf die Narbenseite 2 aufgetragen und durch Wasserentzug verfestigen gelassen wird. Eine Wärmezufuhr ist hierfür nicht unbedingt erforderlich, da das hygroskopische Leder 1 einen Großteil des in der Dispersion enthaltenen Wassers aufsaugt. Die Mikrohohlkugeln werden entweder der Dispersion in der erforderlichen Menge beigemengt oder aus Kompaktteilchen durch Wärmezufuhr in situ gebildet. Der Pigmentanteil besteht vorzugsweise zu mehr als 75 % aus Polyvinylidenchlorid. Diese Wärmezufuhr kann beispielsweise gleichzeitig mit der erforderlichen Prägung der Oberseite 7 der Schicht 4 vorgenommen werden, damit diese Oberseite die gewünschte Nappanarbenstruktur erhält. Diese Prägung erfolgt zweckmäßig durch Prägewalzen, welche an ihrer Oberfläche eine der herzustellenden Nappanarbenstruktur entsprechende Prägung besitzen, und die auf eine Temperatur zwischen 80°C und 120°C erwärmt werden. Durch den relativ niedrigen Prägedruck von weniger als 125 kg/cm², vorzugsweise weniger als 90 kg/cm² und einer Prägeverweilzeit von weniger als zwei Sekunden wird das Leder selbst kaum verdichtet und verhärtet. Bei der angewendeten Prägetemperatur von etwa 85°C füllen die sich aus den zu mindestens 75% Polyvinylidenchlorid bestehenden Kompaktteilchen bildenden Mikrohohlkugeln auch die sogenannten hair cells mit Überdruck aus, wodurch die Losnarbigkeit reduziert wird.

Die Oberseite 7 der ersten Schicht 4 wird durch die zweite Schicht 5 abgedeckt, die zwischen 0,02 und 0,05 mm dick ist und aus mehreren, nacheinander beispielsweise durch Aufsprühen aufgebrachten Lagen entstehen kann, wie dies durch die Trennungslinie 9 schematisch angedeutet ist. Die zweite Schicht 5 ist zwischen 0,02 mm und 0,05 mm dick, also sehr dünn, sodass durch diese Mattierungsmittel enthaltende Schicht die Wasserdampfdurchlässigkeit nur unwesentlich beeinträchtigt wird, und besteht aus einem aliphatischen Polyurethan oder enthält zumindest aliphatisches, vernetztes Polyurethan auf Esterbasis. Sie kann aus einer verfestigten Lösung bzw. verfestigten Dispersion bestehen und Pigmente aufweisen, durch welche die gewünschte Farbgebung des Leders erzielt wird. Beim Aufbringen dieser zweiten Schicht 5 verankert sich das Material in den offenen Poren an der Oberseite 7 der ersten Schicht 4, ohne jedoch in diese erste Schicht 4 einzudringen, wodurch einerseits eine gute Verbindung zwischen den beiden Schichten 4, 5 gewährleistet ist, anderseits die Eigenschaften der porösen Schicht 4 nicht nachteilig beeinflusst werden. Die Struktur an der Oberseite 7 der ersten Schicht 4 bildet sich an der Oberseite 10 der zweiten Schicht 5 ab, sodass an der Sichtseite des Leders gleichfalls die gewünschte Narbenstruktur entsteht.

Einer der eine der beiden Schichten 4,5 bildenden Lösungen bzw. Dispersionen oder auch beiden Lösungen bzw. Dispersionen kann feinpulverigen Holzmehl beigemengt werden, wodurch die Wasserdampfdurchlässigkeit der Zurichtung verbessert wird. Durch Variation der Menge des beigemengten Holzmehles kann die Wasserdampfdurchlässigkeit verändert und so den Erfordernissen angepasst werden.

Vorteilhaft ist es, wenn die die Zurichtung bildende Dispersion bzw. Lösung auf Formatteile aufgebracht wird, die aus einer ganzen Lederhaut herausgetrennt, beispielsweise herausgestanzt oder herausgeschnitten, werden. Dadurch ist es möglich, die Beschaffenheit der Zurichtung der späteren Verwendung dieser Formatteile anzupassen. Außerdem werden die Vorrichtungen zum Aufbringen der die Zurichtung bildenden Dispersion bzw. Lösung und vor allem auch für die Ausübung des für die Prägung erforderlichen Druckes wesentlich einfacher und billiger.

Das erfindungsgemäße Leder muss, damit die erforderliche Weichheit gewährleistet ist, zwischen zwei und zwölf Stunden lang gewalkt werden. Dieses Walken kann in einem Arbeitsvorgang entweder bereits nach dem Verfestigen der ersten Schicht 4 oder erst nach dem Verfestigen der zweiten Schicht 5 vorgenommen werden. Es ist aber auch möglich, einen Teil des Walkens nach dem Verfestigen der ersten Schicht 4 und den Rest nach dem Verfestigen der Lackschicht 5 durchzuführen. Besonders schöne weiche und wenig losnarbige Walknappaleder werden erzielt, wenn man nach dem Prägen der ersten Schicht 4 etwa zwei bis vier Stunden walkt, hierauf die zweite Schicht 5 aufträgt und anschließend nochmals zwei bis vier Stunden walkt.

Zur Vergrößerung der Anzahl der für die Wasserdampfdurchlässigkeit wichtigen offenen Zellen, welche sich zwischen den geschlossenen, von den Mikrohohlkugeln gebildeten offenen Zellen befinden, können die Hüllen einzelner der Mikrohohlkugeln geöffnet werden. Dies kann entweder auf chemischem Wege durch Einwirken von Lösungsmittel, welches der zweiten Schicht 5 beigemengt ist, erfolgen, oder durch Einstechen von einzelne Hüllen der Mikrohohlkugeln zerstörender Nadeln in die erste Schicht 4 erfolgen.

Eine weitere Erhöhung der offenen Zellen kann auch durch Einrühren von Luft in die die erste Schicht 4 bildende Dispersion vor deren Aufbringen erfolgen.

Die Oberfläche der Lackschicht kann gegebenenfalls eine sehr dünne abschließende Finishschicht aus einem Polyamid oder Mischpolyamid aufweisen.

Zum Feststellen der Dicke der gesamten Zurichtung 3 wird diese mit Hilfe eines Lösungsmittels, wie beispielsweise Ethylacetat, von der Narbenseite 2 entfernt. Mittels einer Messscheibe von 10 mm Durchmesser wird bei einem Anpressdruck von 2 N die Dicke ermittelt. Bei dieser Methode wird sichergestellt, dass Unebenheiten, die durch das Vorhandensein von Narbkuppen und Narbtälern entstehen, ausgeglichen werden.

Das erfindungsgemäße Leder greift sich infolge der mikroskopischen Feinstruktur der Schaumschicht 4, insbesondere dann, wenn die Lackschicht 5 weniger als 0,03 mm stark ist, sehr angenehm an und sieht edel und vollnarbig uniform über die ganze Fläche aus. Die Lackschicht bestimmt den Matt- bzw. Glanzgrad.

Ein großer Vorteil der Erfindung besteht darin, dass neben der Verbesserung der Losnarbigkeit und der Narbstandfestigkeit kleine Oberflächenfehler der Haut abgedeckt werden, ohne die Wasserdampfdurchlässigkeit und den Weichheitsgrad zu beeinflussen, sodass auch dadurch die Ausnutzung der Hautfläche verbessert wird.

## Patentansprüche

1. Vollnarbiges Rindnappaleder, das an einer Seite mit einer Zurichtung (3) versehen ist, welche teilweise eine aus einer verfestigten, Mikrohohlkugeln (6) enthaltenden Polyurethandispersion gebildete Schaumstruktur aufweist, **dadurch gekennzeichnet, dass** die Zurichtung (3) aus einer auf der Narbenseite (2) des vollnarbigen Leders (1) aufgebrachten, eine Dicke zwischen 0,015 mm und 0,04 mm aufweisenden, vorzugsweise pigmentierten ersten Schicht (4) aus einer verfestigten, Polyurethan und/oder Polyacrylat enthaltenden Dispersion, die, überwiegend geschlossene Zellen bildende, Mikrohohlkugeln (6) mit einem Durchmesser kleiner als 45 µm, vorzugsweise mit einem Durchmesser zwischen 15 und 35 µm, und einem Anteil von zumindest 10 Vol.-% an offenen Zellen aufweist und die an ihrer Oberseite (7) eine Nappaprägung besitzt, und aus einer auf dieser ersten Schicht (4) aufgebrachten, gegebenenfalls von mehreren Lagen gebildeten zweiten Schicht (5) besteht, die aus einem vernetzten, ein Mattierungsmittel enthaltenden Lackauftrag auf Polyurethanbasis gebildet ist, und dass das Leder einer Walkbehandlung unterzogen ist.

2. Leder nach Anspruch 1, **dadurch gekennzeichnet, dass** die Mikrohohlkugeln (6) eine dünne Hülle aufweisen, die vorzugsweise zu mehr als 75% aus Polyvinylidenchlorid und die zu weniger als 25% aus Polyacrylnitril besteht, und dass die Mikrohohlkugeln (6) im Inneren ein schweres Gas, vorzugsweise Isobutan, enthalten.

3. Leder nach Anspruch 1 oder 2, **dadurch gekennzeichnet, dass** die dünne Hülle einzelner Mikrohohlkugeln (6) durch mechanische und/oder chemische Einwirkung geöffnet ist.

4. Leder nach Anspruch 1, 2 oder 3, **dadurch gekennzeichnet, dass** die zweite Schicht (5) ein die dünnen Hüllen einzelner Mikrohohlkugeln (6) teilweise anlösendes Lösungsmittel, wie Ethylacetat oder Methylethylketon, enthält.

5. Leder nach einem der Ansprüche 1 bis 4, **dadurch gekennzeichnet, dass** die zweite Schicht (5) eine Dicke zwischen 0,02 mm und 0,05 mm aufweist.

6. Leder nach einem der Ansprüche 1 bis 5, **dadurch gekennzeichnet, dass** das Rindleder (1) eine Dicke zwischen 1,0 mm und 1,4 mm aufweist.

7. Leder nach einem der Ansprüche 1 bis 6, **dadurch gekennzeichnet, dass** es eine Wasserdampfdurchlässigkeit von mehr als 0,6 mg/cm²•h, vorzugsweise von mehr als 1,0 mg/cm²•h, aufweist.

8. Leder nach Anspruch 1, **dadurch gekennzeichnet, dass** als Mattierungsmittel Siliziumdioxid, vorzugsweise mit einer Teilchengröße zwischen 2 µm und 4 µm verwendet wird.

9. Leder nach Anspruch 1, **dadurch gekennzeichnet, dass** wenigstens eine der Schichten (4,5) ein feinpulveriges Holzmehl in einer Menge zwischen 0,5 und 9 Vol.-%, vorzugsweise in einer Menge zwischen 1,5 und 7 Vol.-%, enthält.

10. Leder nach Anspruch 1, **dadurch gekennzeichnet, dass** es vor dem Aufbringen der Schichten (4,5) die Form eines Formatzuschnittes aufweist.

11. Verfahren zur Herstellung eines vollnarbigen Rindnappaleders nach Anspruch 1, **dadurch gekennzeichnet, dass** auf die Narbenseite (2) des Rindleders eine, vorzugsweise ein Pigment enthaltende Dispersion auf Basis von Polyurethan und/oder Polyacrylat aufgetragen wird, welche Mikrohohlkugeln (6) mit einem Durchmesser zwischen 15 µm und 45 µm und/oder Kompaktteilchen enthält, aus welchen durch Wärmezufuhr derartige Mikrohohlkugeln in situ gebildet werden, wobei die Mikrohohlkugeln (6) eine dünne Hülle aus Polyvinylidenchlorid und Polyacrylnitril aufweisen, welche ein schweres Gas, vorzugsweise Isobutan, enthält, und wobei die Menge der Dispersion so gewählt wird, dass nach ihrer Verfestigung durch Wasserentzug eine erste Schicht mit einer Dicke zwischen 0,015 mm und 0,04 mm gebildet wird, welche aus den Mikrohohlkugeln bestehende, überwiegend geschlossene Zellen, jedoch mindestens 10 Vol.-% offene Zellen aufweist, dass die verfestigte erste Schicht (4) durch Anwendung von Druck und/oder Wärme geprägt wird, dass hierauf eine vernetzbare, vorzugsweise Mattierungsmittel enthaltende, Polyurethandispersion, gegebenenfalls in mehreren aufeinanderfolgenden Lagen, aufgetragen wird, welche eine zweite Lackschicht (5) bildet, und dass das Leder einer Walkbehandlung unterzogen wird.

12. Verfahren nach Anspruch 11, **dadurch gekennzeichnet, dass** die dünne Hülle einzelner Mikrohohlkugeln (6) durch ein, vorzugsweise in der zweiten Schicht (5) enthaltenes Lösungsmittel, wie Ethylacetat oder Methylethylketon, angelöst werden.

13. Verfahren nach Anspruch 11, **dadurch gekennzeichnet, dass** in der ersten Schicht (4), gegebenenfalls während des Prägens, durch Einstechen mittels Nadeln od. dgl. Löcher hergestellt werden, wodurch die dünne Hülle einzelner Mikrohohlkugeln (6) geöffnet wird.

14. Verfahren nach Anspruch 11, **dadurch gekennzeichnet, dass** die Prägung unter Anwendung einer Prägewalze mit einer Temperatur zwischen 80°C und 120°C erfolgt, wobei der Wärmekontakt zwischen der Prägewalze und der ersten Schicht (4), vorzugsweise weniger als 2 sec. beträgt.

15. Verfahren nach Anspruch 11, **dadurch gekennzeichnet, dass** die Prägung mit einem Prägedruck von weniger als 125 kg/cm², vorzugsweise weniger als 90 kg/cm² erfolgt.

16. Verfahren nach Anspruch 11, **dadurch gekennzeichnet, dass** die Walkbehandlung nach dem Verfestigen der ersten Schicht (4) und/oder nach dem Verfestigen der zweiten Lackschicht (5) erfolgt.

17. Verfahren nach einem der Ansprüche 11 bis 16, **dadurch gekennzeichnet, dass** die Walkbehandlung über eine Dauer von zumindest 2 Stunden, vorzugsweise von zwischen 8 und 12 Stunden, erfolgt.

18. Verfahren nach Anspruch 11, **dadurch gekennzeichnet, dass** wenigstens einer eine der beiden Schichten (4,5) bildenden Dispersion vor dem Auftragen feinpulveriges Holzmehl in einer Menge zwischen 0,5 und 9 Vol.-%, vorzugsweise in einer Menge zwischen 1,5 und 7 Vol.-%, beigemengt wird.

19. Verfahren nach Anspruch 11, **dadurch gekennzeichnet, dass** die Narbenseite (2) des Rindleders vor dem Auftragen der die erste Schicht (4) bildenden Dispersion einer Vorbehandlung unterzogen wird.

20. Verfahren nach Anspruch 19, **dadurch gekennzeichnet, dass** die Narbenseite (2) des Rindleders, vorzugsweise durch Schleifen, aufgeraut wird.

21. Verfahren nach Anspruch 19, **dadurch gekennzeichnet, dass** die Narbenseite (2) des Rindleders beflammt wird.

22. Verfahren nach Anspruch 11, **dadurch gekennzeichnet, dass** aus einer Rindlederhaut vor dem Auftragen der die Zurichtung bildenden Dispersion Formatteile herausgetrennt werden.

23. Verfahren nach Anspruch 11 und 22, **dadurch gekennzeichnet, dass** das Auftragen der die Zurichtung bildenden Dispersion durch einen Datenträger gesteuert wird.

## Claims

1. Full-grain cattle nappa that, on one side, is provided with a finishing (3) which comprises partially a foam structure formed of a hardened polyurethane dispersion containing hollow micro-spheres (6), **characterised in that** said finish (3) consists of a first, preferably pigmented, layer (4) of a hardened dispersion that contains polyurethane and/or polyacrylate, applied to the grain side (2) of the full-grain leather (1), having a thickness of between 0.015 mm and 0.04 mm and possessing hollow micro-spheres (6) which form predominantly closed cells, have a diameter smaller than 45 µm, preferably a diameter of between 15 and 35 µm, and comprise a proportion of at least 10 % by volume of open cells, said layer having a nappa embossing on its surface (7), and of a second layer (5) applied onto said first layer (4) and optionally formed of a plurality of coatings, which consists of a cross-linked varnishing coat on the basis of polyurethane which contains a delustering agent, and the leather is subjected to a fulling treatment.

2. Leather according to claim 1, **characterised in that** said hollow micro-spheres (6) comprise a thin hull, which consists preferably of more than 75% of polyvinylidene chloride and of less than 25% of polyacrylic nitrile, and that the hollow micro-spheres (6) in their interior contain a heavy gas, preferably isobutane.

3. Leather according to claim 1 or 2, **characterised in that** the thin hull of individual hollow micro-spheres (6) is opened by mechanical or chemical action.

4. Leather according to claim 1, 2 or 3, **characterised in that** said second layer (5) comprises a solvent which dissolves partially the thin hulls of individual hollow micro-spheres (6), such as ethyl acetate or methylene ethyl ketone.

5. Leather according to any of claims 1 to 4, **characterised in that** said second layer (5) has a thickness of between 0.02 mm and 0.05 mm.

6. Leather according to any of claims 1 to 5, **characterised in that** the cattle leather (1) has a thickness of between 1.0 mm and 1.4 mm.

7. Leather according to any of claims 1 to 6, **characterised in that** it has a water steam permeability of more than 0.6 mg/cm²•h, preferably more than 1.0 mg/cm²•h.

8. Leather according to claim 1, **characterised in that** silica, preferably of a particle size of between 2 µm and 4 µm, is used as a delustering agent.

9. Leather according to claim 1, **characterised in that** at least one of the layers (4, 5) contains pulverulent wood powder of a quantity of between 0.5 and 9 % by volume, preferably of a quantity of between 1.5 and 7 % by volume.

10. Leather according to claim 1, **characterised in that** before applying the layers (4, 5) it has the shape of a format blank.

11. Process for preparing a full-grain cattle nappa according to claim 1, **characterised in that** on the grain side (2) of the cattle leather a, preferably a pigment containing, dispersion on the basis of polyurethane and/or polyacrylate is applied which contains hollow micro-spheres (6) having a diameter of between 15 µm and 45 µm and/or compact particles from which such hollow micro-spheres are formed *in situ* by addition of heat, said hollow micro-sphere (6) comprising a thin hull of polyvinylidene chloride and polyacrylic nitrile which contains a heavy gas, preferably isobutane, the quantity of the dispersion being chosen in such a way that a first layer having a thickness of between 0.015 mm and 0.04 mm is formed after its solidification by removal of water, said first layer comprising predominantly closed cells consisting of said hollow micro-spheres, but at least 10 % by volume of open cells, that the solidified first layer (4) is embossed employing pressure and/or heat, that afterwards a dispersion of polyurethane to be cross-linked is applied, optionally in a plurality of subsequent coatings, which preferably contains delustering agents, thus forming a second layer of lacquer (5), and that the leather is subjected to a fulling treatment.

12. Process according to claim 11, **characterised in that** said thin hull of individual hollow micro-spheres (6) is slightly dissolved by a solvent, such as ethyl acetate or methylene ethyl ketone, preferably contained in said second layer (5).

13. Process according to claim 11, **characterised in that** holes are produced in said first layer (4), optionally during embossing, by puncturing with needles or the like, so that said thin hull of individual hollow micro-spheres (6) is opened.

14. Process according to claim 11, **characterised in that** embossing is effected using an embossing roller having a temperature of between 80°C and 120°C, the heat contact between said embossing roller and said first layer (4) preferably amounting to less than 2 sec.

15. Process according to claim 11, **characterised in that** embossing is effected under an embossing pressure of less than 125 kg/cm², preferably less than 90 kg/cm².

16. Process according to claim 11, **characterised in that** said fulling treatment is effected after solidification of said first layer (4) and/or after solidification of said second varnishing layer (5).

17. Process according to any of claims 11 to 16, **characterised in that** said fulling treatment is effected during a period of at least 2 hours, preferably between 8 and 12 hours.

18. Process according to claim 11, **characterised in that** pulverulent wood powder of a quantity of between 0.5 and 9 % by volume, preferably of a quantity of between 1.5 and 7 % by volume, is admixed to at least one of the dispersions forming the two layers (4, 5) prior to being applied.

19. Process according to claim 11, **characterised in that** the grain side (2) of the cattle leather, prior to applying the dispersion which forms said first layer (4), is subjected to a pre-treatment.

20. Process according to claim 19, **characterised in that** the grain side (2) of the cattle leather is roughened, preferably by grinding.

21. Process according to claim 19, **characterised in that** the grain side (2) of the cattle leather is flamed.

22. Process according to claim 11, **characterised in that** format parts are severed from a cattle leather hide prior to applying the dispersion which forms the finish.

23. Process according to claims 11 and 22, **characterised in that** applying the dispersion, which forms the finish, is controlled by a data carrier.

## Revendications

1. Nappa bovin pleine fleur pourvue à un côté d'un corroyage (3), qui présente partiellement une structure alvéolaire formé d'une dispersion solidifiée de polyuréthane, qui contient des micro-sphères creux (6), **caractérisé en ce que** le corroyage (3) consiste d'une première couche (4) d'une dispersion solidifiée contenant du polyuréthane et/ou du polyacrylate appliquée au côté de fleur (2) du cuir pleine fleur (1), qui a une épaisseur entre 0,015 mm et 0,04 mm et, de préférence, est pigmentée, qui comprend les micro-sphères creux (6), qui forment d'une manière prépondérante des alvéoles fermés et ont un diamètre plus petit que 45 µm, préférablement un diamètre entre 15 et 35 µm, et qui comprend une portion d'au moins 10 % en volume des alvéoles ouverts et un estampage de nappa à sa surface supérieure (7), et d'une deuxième couche (5) appliquée à cette première couche (4) et, le cas échéant, consistant de plusieurs enduits, qui est formée d'une couche de laque à base de polyuréthane, qui est réticulée et contient un agent de mise au mat, et que le cuir est soumis d'un traitement de foulage.

2. Cuir selon la revendication 1, **caractérisé en ce que** les micro-sphères creux (6) comprennent une enveloppe mince, qui consiste de préférence de plus de 75 % de chlorure de polyvinylidène et de moins de 25 % de polyacrylonitrile, et que les micro-sphères creux (6) à l'intérieur contiennent un gaz lourd, préférablement d'isobutane.

3. Cuir selon la revendication 1 ou 2, **caractérisé en ce que** l'enveloppe mince des micro-sphères (6) individuelles est ouverte par action mécanique et/ou chimique.

4. Cuir selon la revendication 1, 2 ou 3, **caractérisé en ce que** la deuxième couche (5) contient un solvant, comme l'acétate d'éthyle ou la cétone d'éthyle méthylique, qui dissout partiellement les couches minces des micro-sphères creuses (6) individuelles.

5. Cuir selon une quelconque des revendications 1 à 4, **caractérisé en ce que** la deuxième couche (5) a une épaisseur entre 0,02 mm et 0,05 mm.

6. Cuir selon une quelconque des revendications 1 à 5, **caractérisé en ce que** le cuir bovin (1) a une épaisseur entre 1,0 mm et 1,4 mm.

7. Cuir selon une quelconque des revendications 1 à 6, **caractérisé en ce qu'**il a une perméabilité au vapeur d'eau de plus de 0,6 mg/cm²•h, préférablement de plus de 1,0 mg/cm²•h.

8. Cuir selon la revendication 1, **caractérisé en ce que** l'on utilise de la silice comme agent de mise au mat, de préférence d'une grandeur de la particule élémentaire entre 2 µm et 4 µm.

9. Cuir selon la revendication 1, **caractérisé en ce qu'**au moins une des couches (4, 5) contient une farine de bois pulvérulent d'une quantité entre 0,5 et 9 % en volume, de préférence d'une quantité entre 1,5 et 7 % en volume.

10. Cuir selon la revendication 1, **caractérisé en ce qu'**il présente la forme d'une façon de format avant que les couches (4, 5) soient appliquées.

11. Procédé de préparation de nappa bovin pleine fleur selon la revendication 1, **caractérisé en ce qu'**une dispersion à la base de polyuréthane et/ou de polyacrylate, préférablement contenant un pigment, est appliquée au côté de fleur (2) du cuir bovin, et contient des micro-spères creux (6) ayant un diamètre entre 15 µm et 45 µm et/ou des particules compactes, desquels des tels micro-sphères creux sont formées in situ par adduction de chaleur, lesdits micro-sphères creux (6) comprenant une enveloppe mince de chlorure de polyvinilydène et de polyacrylonitrile, qui contient un gaz lourd, préférablement d'isobutane, la quantité de la dispersion étant choisie de manière qu'une première couche ayant une épaisseur entre 0,015 mm et 0,04 mm est formée après sa solidification par assèchement, ladite couche comprenant d'une manière prépondérante des alvéoles fermés consistant des micro-sphères creux, mais au moins 10 % en volume des alvéoles ouverts, que la première couche (4) solidifiée est grainée par l'application de la pression et/ou de la chaleur, que l'on applique puis une dispersion réticulable de polyurèthane, qui contient préférablement des agent de mise au mat, le cas échéant en forme de plusieurs enduits successifs, qui forme une deuxième couche de laque (5), et que le cuir et soumis d'un traitement de foulage.

12. Procédé selon la revendication 11, **caractérisé en ce que** l'enveloppe mince des micro-sphères individuelles sont légèrement dissouts par un solvant, comme l'acétate d'éthyle ou la cétone d'éthyle méthylique, qui est de préférence contenu dans la deuxième couche (5).

13. Procédé selon la revendication 11, **caractérisé en ce que** l'on produit des trous dans la première couche (4), le cas échéant pendant le grainage, en piquant au moyens des aiguilles ou pareil, de manière que l'enveloppe mince des micro-sphères creux (6) individuelles soit ouverte.

14. Procédé selon la revendication 11, **caractérisé en ce que** le grainage est effectué en utilisant un rouleau de grainage à une température entre 80°C et 120°C, le contact thermique entre le rouleau et la première couche (4) se montant de préférence à moins de 2 sec.

15. Procédé selon la revendication 11, **caractérisé en ce que** le grainage est effectué avec une pression de grainage de moins de 125 kg/cm², préférablement moins de 90 kg/cm².

16. Procédé selon la revendication 11, **caractérisé en ce que** le traitement de foulage est effectué après la solidification de la première couche (4) et/ou après la solidification de la deuxième couche de laque (5).

17. Procédé selon une quelconque des revendications 11 à 16, **caractérisé en ce que** le traitement de foulage est effectué pendant une période d'au moins 2 heures, préférablement entre 8 et 12 heures.

18. Procédé selon la revendication 11, **caractérisé en ce que** l'on ajoute de la farine de bois pulvérulent d'une quantité entre 0,5 à 9 % en volume, de préférence d'une quantité entre 1,5 et 7 % en volume, à au moins une dispersion formant une des deux couches (4, 5) avant d'être appliquée.

19. Procédé selon la revendication 11, **caractérisé en ce que** le côté de fleur (2) du cuir bovin est soumis d'un traitement préparatoire avant l'application de la dispersion formant la première couche (4).

20. Procédé selon la revendication 19, **caractérisé en ce que** le côté de fleur (2) du cuir bovin est rendu rugueux, préférablement par frottement.

21. Procédé selon la revendication 19, **caractérisé en ce que** le côté de fleur (2) du cuir bovin est flambé.

22. Procédé selon la revendication 11, **caractérisé en ce que** l'on détache des parties de format d'une peau de cuir bovin avant d'appliquer la dispersion formant le corroyage.

23. Procédé selon les revendications 11 et 22, **caractérisé en ce que** l'application de la dispersion formant le corroyage et commandée par un support de données.
